# EUROPEAN PATENT SPECIFICATION

(11) **EP 0 605 309 B1**
(45) Date of publication and mention of the grant of the patent: **08.09.1999**
(21) Application number: 93403173.3
(22) Date of filing: 27.12.1993
(51) Int. Cl.: H04N 1/32

(54) **Communication apparatus**
Kommunikationsgerät
Appareil de communication

(30) Priority: 28.12.1992 JP 34741292
(43) Date of publication of application: 06.07.1994
(73) Proprietor: CANON KABUSHIKI KAISHA, Tokyo (JP)
(72) Inventor: Matsumoto, Koichi, Ohta-ku, Tokyo (JP)
(74) Representative: Rinuy, Santarelli

(56) References cited:
- PATENT ABSTRACTS OF JAPAN vol. 14, no. 302 (E-0946) 28 June 1990 & JP-A-02 097 159 (RICOH CO LTD) 9 April 1990
- PATENT ABSTRACTS OF JAPAN vol. 12, no. 348 (E-659) 19 September 1988 & JP-A-63 104 567 (CANON INC) 10 May 1988

## Description

### BACKGROUND OF THE INVENTION

### Field of the Invention

The present invention relates to a communication apparatus which disconnects a line by detecting an incoming signal from a destination station or a switchboard or exchanger.

### Related Background Art

In a prior art communication apparatus such as a facsimile apparatus, when a signal sent from a switchboard such as a busy tone (BT) signal is to be detected, it is tested for a predetermined level width as a valid signal, a frequency at a given time as a valid frequency band and ON/OFF time of the signal as a valid duration.

In the prior art, the facsimile apparatus is designed to disconnect the line by detecting a signal (busy tone) sent from the switchboard at the time of call, or by detecting a signal (busy tone) sent from the switchboard when a destination station disconnects the line after the call. Where the destination station is an apparatus which sends out only a facsimile signal, no problem arises. However, a recent facsimile apparatus has an automatic recording and responding function which sends out a response message other than the facsimile signal.

Components (frequency, level, etc.) of the response message include components of the signal (busy tone) from the switchboard and the periods thereof are very close to each other. As a result, the response message and the signal (busy tone) from the switchboard are frequently misdetected and even if the destination station was accessed the line may be disconnected by the detection of the response message from the destination station.

### SUMMARY OF THE INVENTION

it is an object of the present invention, which is defined in claim 1, to improve a commmunication apparatus in the light of the above problems.

It is another object of the present invention to provide a communication apparatus which allows an operator to set the number of times of detection of a pulse when a frequency, a signal level or a period of the incoming signal from a communication line is tested to detect a predetermined signal.

Other objects of the present invention will be apparent from the following description and drawings of the preferred embodiments.

### BRIEF DESCRIPTION OF THE DRAWINGS

Fig.1 shows a block diagram of an embodiment of a facsimile apparatus,

Fig. 2 shows a detail of the number of times of period setting circuit,

Fig. 3 shows a switching circuit for setting a predetermined number of times of period,

Fig. 4 shows a procedure for setting the number of times of period as a count,

Fig. 5 shows a flow chart of an operation of the embodiment,

Fig. 6 shows a flow chart of an operation of the embodiment,

Fig. 7 shows a flow chart of an operation of the embodiment, and

Fig. 8 shows a flow chart of an operation of the embodiment.

### DETAILED DESCRIPTION OF THE PREFERRED EMBODIMENTS

One embodiment of the present invention is now explained with reference to the drawings.

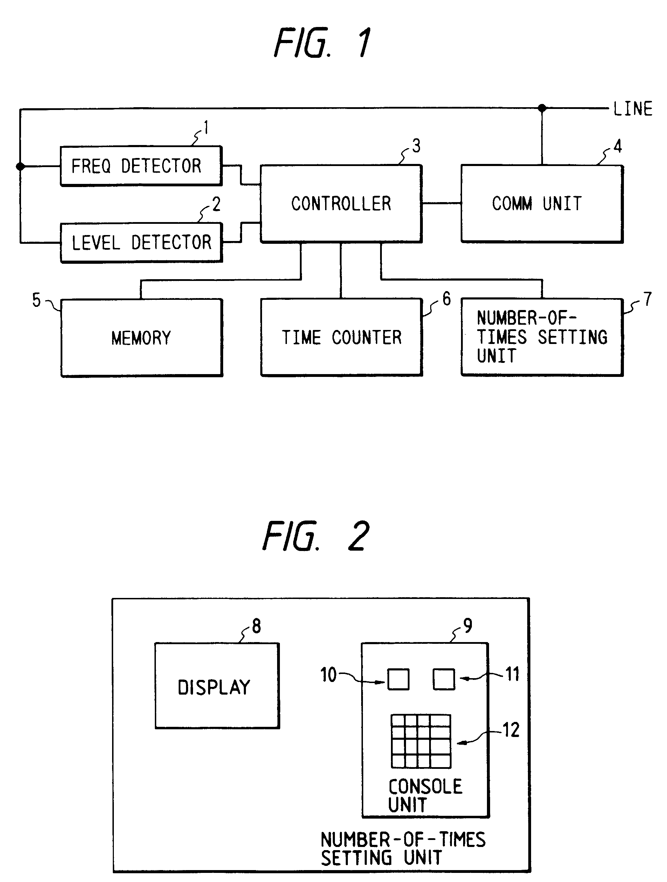

Fig. 1 shows an embodiment of the present invention. Numerals 1 and 2 denote a frequency detector and a level detector which detect a frequency and a level of a signal inputted from a switchboard or a destination station through a line. Numeral 3 denotes a control unit comprising a CPU for effecting the disconnection of the line based on the outputs from the frequency detector 1 and the level detector 2 and the time measurement, numeral 4 denotes a communication unit for communicating with the destination station, numeral 5 denotes a memory unit for storing the number of times of period such as a disconnection signal (busy tone) from the switchboard, numeral 6 denotes a time measurement unit for measuring an ON/OFF time of a signal inputted from the switchboard or the destination station through the line, and numeral 7 denotes a number of times of period setting unit comprising a display unit and a console unit.

Fig. 2 shows a detail of the number of times of period setting unit 7. Numeral 8 denotes a display unit for indicating an operation when the number of times of period is to be set, numeral 9 denotes a console unit for setting the number of times of period, numeral 10 denotes a number of times of period setting key for indicating the start of setting of the number of times of period, numeral 11 denotes a setting key for setting the number of times of period in the memory unit 5, and numeral 12 denotes ten-key buttons for setting the number of times of period.

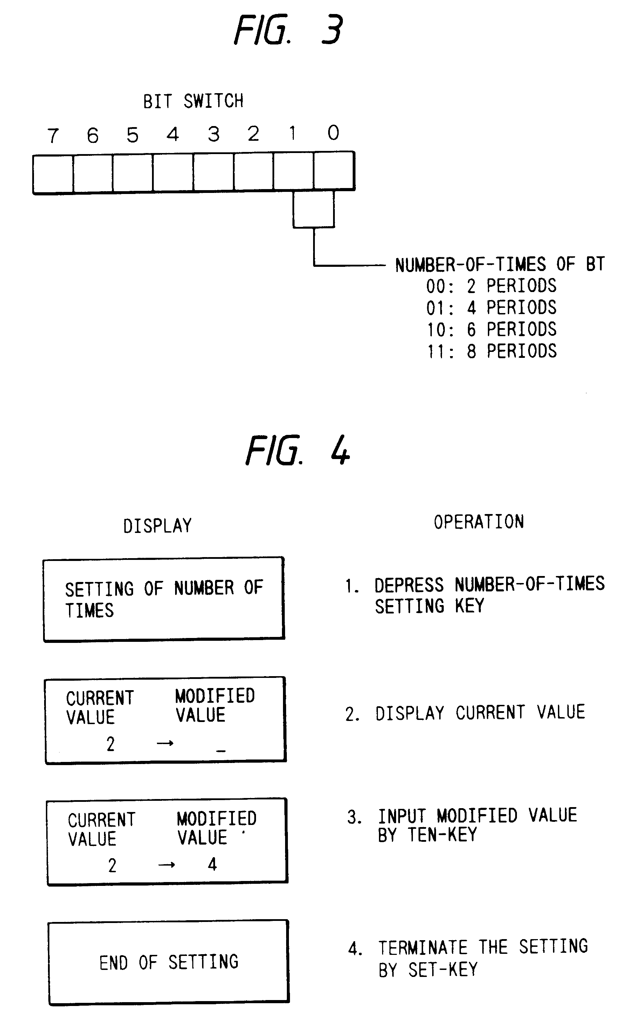

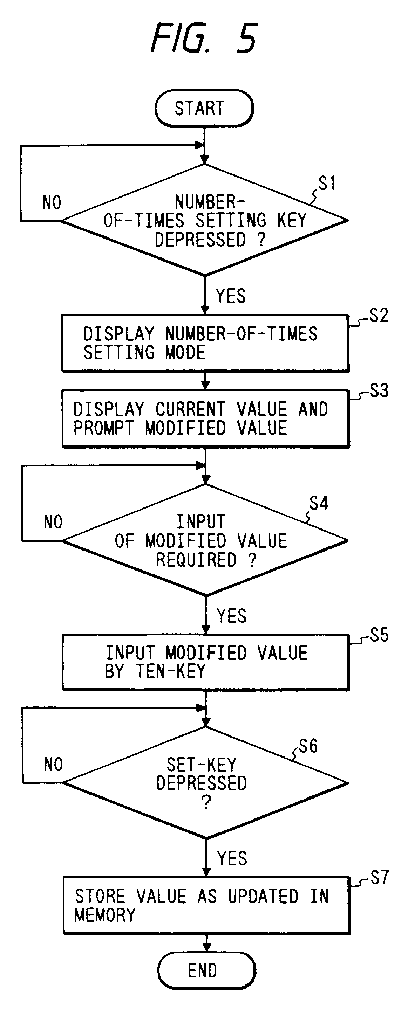

An operation of setting the number of times of period is now explained with reference to an operation chart and a flow chart. Referring to Figs. 4 and 5, the number of times of period setting key 10 is depressed in a step S1 and a number of times of period setting screen is displayed on the display unit 8 in step S2. Then, in step S3, the currently set number of times of period is displayed as an input screen for a modified value. In steps S4 and S5, the modified value is set by the ten-keys 12, and in step S6, the setting key 1 is depressed to set the current value in the memory unit 5 as the modified value and the setting of the number of times of period is completed. As shown in Fig. 3, a modified value of the number of times of period may be predetermined and the predetermined number of times may be selected by a switch. In this case, four steps of periods (for example, 2, 4, 6 and 8 periods) may be set by using the bits 0 and 1 by a bit switch (which may be either hardware or software) and the bits may be changed to change the number of times of period.

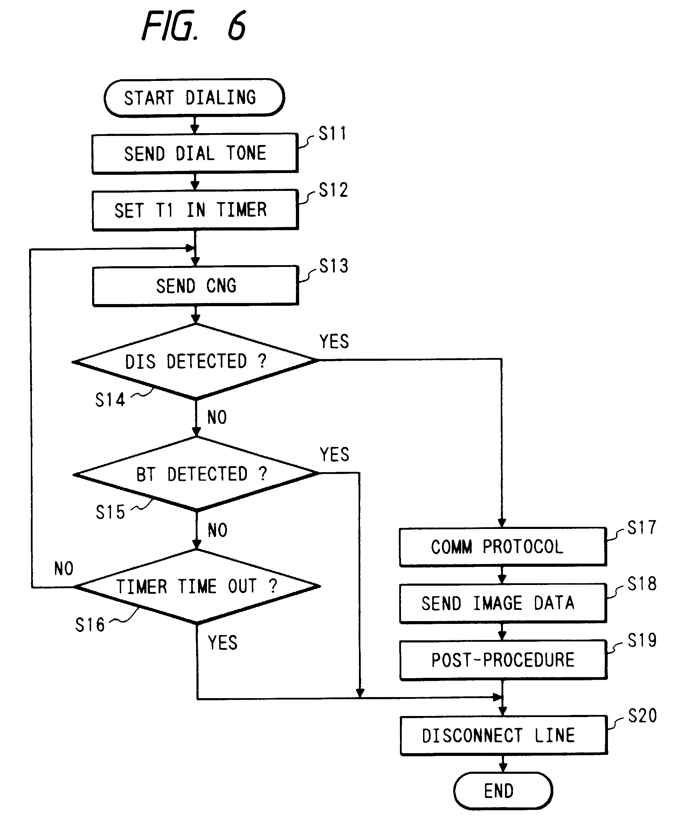

An operation to determine the disconnection of the line by the setting of the number of times of period is now explained with reference to Figs. 6, 7 and 8.

Fig. 6 shows a flow chart of an operation to prevent the misdetection of a busy tone by a response of an automatic recording and responding telephone sent from the destination station when it is called.

In step S11, a dial tone is sent to the destination station to be called. In a step S12, a time T1 is set in the timer and the timer operation is started. In step S13, a CNG signal is sent. In step S14, a DIS signal from the destination station is detected. In step S15, a busy tone is detected. In step S16, a time-over of time T1 is measured. The routine of steps S13 - S16 is repeated until the time-over of the time T1. If the busy tone is detected in step S15 or the time-over is detected in step S16, the process proceeds to step S20 to disconnect the line.

If the DIS signal is detected in step S14, a communication protocol is conducted in step S17, an image is sent in step S18, a post protocol is effected in step S19, and the line is disconnected in step S20.

A detail of the detection of the busy tone in the step S15 is now explained. In step S15, the number of times of signal pulses of the busy tone signal set in the number of times of period setting operation described above is counted.

The frequency and level of the signal sent from the line shown in Fig. 1 are detected by the frequency detector 1 and the level detector 2. The frequency corresponding to the busy tone is detected by the frequency detector 1 and if the level detector 2 detects that the signal level has exceeded a predetermined level, the busy signal is turned on and the ON/OFF time thereof is measured by the control unit 3. It is compared with the ON/OFF time of the busy signal to detect the pulse of the busy signal. The number of times of the pulses of the busy signal is compared with setting and if the pulses of the predetermined count are detected, the detection of the busy signal is detected.

If the pulses of the busy signal are detected in step S15 of Fig. 6 by the preset number of times, the line is disconnected in the step S20.

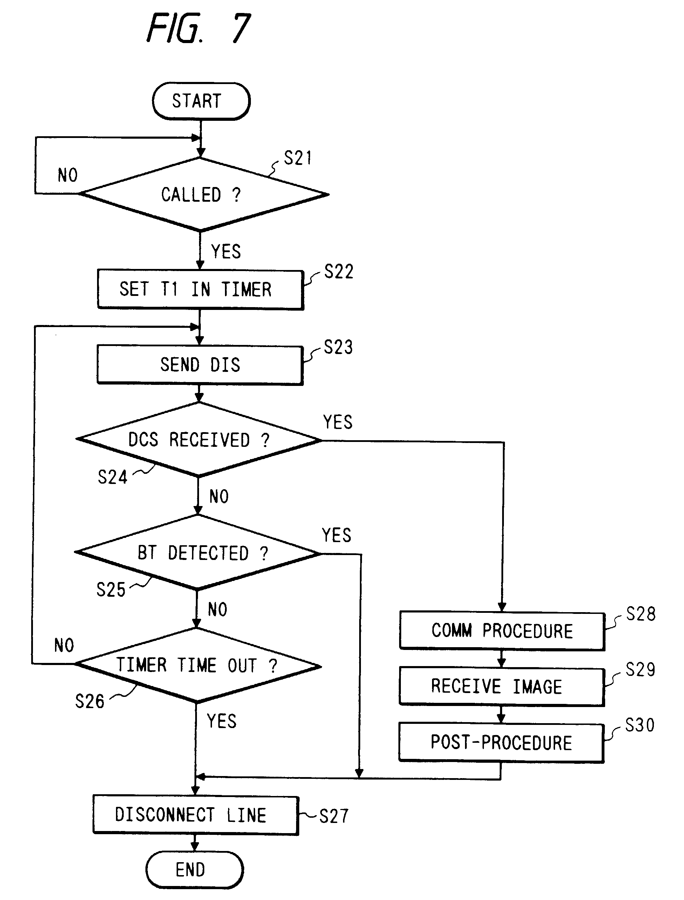

A receiving operation is now explained with reference to Fig. 7.

In step S21, a call is waited and if the call is detected a time T1 is set in the timer in step S22 and it is started. In step S23, a signal DIS is sent and a destination station signal (DCS) is received in step S24. When the DCS is received, an image is received in steps S28 et seq. and if the DCS is not received, the process proceeds to step S25. In step S25, the busy tone is detected a preset number of times as it is in step S15 of Fig. 6, when the busy tone is detected, the line is disconnected in step S27, and if the busy tone is not detected, the time-over of the time T1 is monitored in step S26.

In step S28, a pre-protocol is effected.

In step S29, an image is received. In step S30, a post protocol is effected.

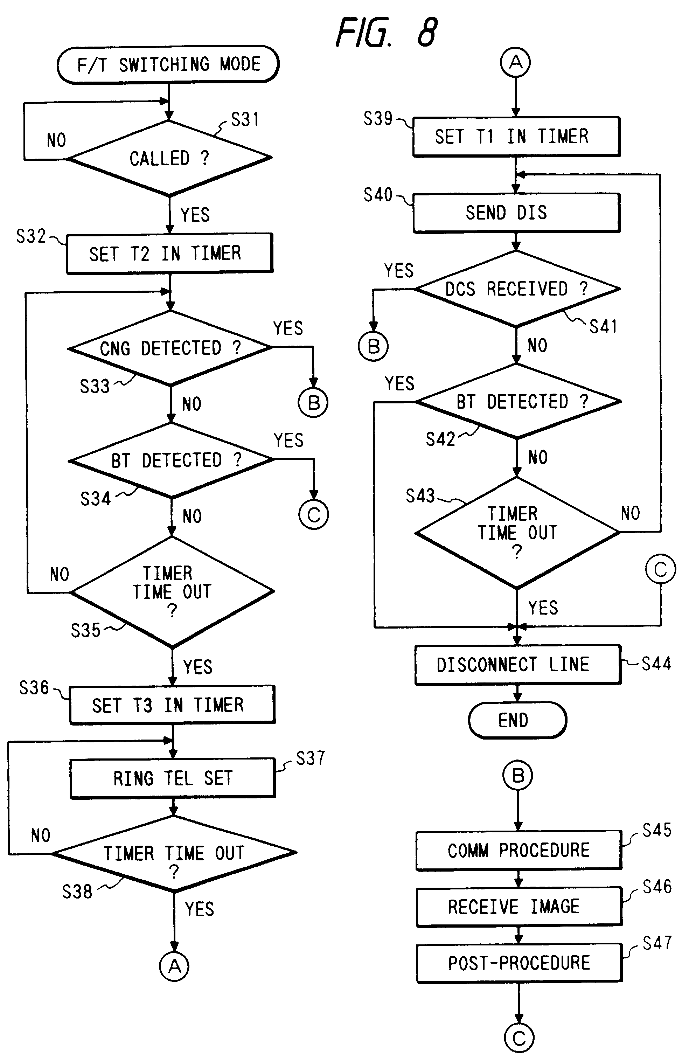

Referring to Fig. 8, an operation of detecting a busy tone in an F/T switch mode is explained.

In step S31, a call is monitored. In step S32, a time T2 for detecting a CNG signal is set. In step S33, the CNG signal is detected. If the CNG signal is detected, an image is received in steps S45 et seq. If the CNG signal is not detected, the busy tone is detected in step S34. If the busy tone is detected, the line is disconnected in step S44. In step S35, steps S33 - S34 are repeated while the time-over of the time T2 is monitored. If the time-over is detected, the process proceeds to step S36.

In step S36, a bell ringing timer T3 for calling an operator is set. In step S37, a bell of the telephone set is rung to call the operator and it is continued to be rung until the time-over of the time T3 is detected in step S38. If the operator hooks of the telephone set during this period, the bell ring is stopped and the F/T switch mode is terminated. When the time T3 is over, the process proceeds to step S39.

In step S39, the timer T1 is set. Steps S39 et seq. are same as those of the receiving operation described above.

In accordance with the present invention, the operator can change the number of times of period of the input signal to discriminate the signal from the switchboard from the speech signal (for example, response message) from the line.

## Claims

1. An image communication apparatus comprising:
communication means (4) for communicating data with a destination station through a line;
detection means (1, 2) for detecting pulses of a busy tone sent from the line; and
control means (3) for causing said communication means to disconnect the line when said detection means detects the pulses of the busy tone;
characterized by further comprising
setting means (7) for setting the number of pulses of the busy tone to be detected by said detection means;
said preset number of pulses being variable by operator setting;
and
said control means causing said communication means to disconnect the line when the number of pulses of the busy tone detected by said detection means reaches the count preset by said setting means.

2. An image communication apparatus according to claim 1 wherein said image communication apparatus is a facsimile apparatus.

3. An image communication apparatus according to claim 1 wherein said detection means detects a frequency and a level of a signal sent from the line, sets a detection signal ON if the signal has a frequency of the busy tone and a level higher than a predetermined level, detects an ON/OFF state of the detection signal, measures an ON/OFF time of the detection signal to determine a period, and if the period of the signal sent from the line corresponds to the signal of the busy tone, determines that the signal sent from the line is the busy tone signal.

4. An image communication apparatus according to claim 1 wherein said setting means has settings of the number of pulses and the operator selects one of them.

5. An image communication apparatus according to claim 4 wherein said setting means is a bit switch and one of the settings is selected by a position of said bit switch.

6. An image communication apparatus according to claim 1 wherein the setting to said setting means is effected by the operator through ten-keys.

## Patentansprüche

1. Bildkommunikationsgerät mit
einer Kommunikationseinrichtung (4) zur Datenkommunikation mit einer Zielstation über eine Leitung,
einer Erfassungseinrichtung (1, 2) zur Erfassung von Impulsen eines von der Leitung gesendeten Besetztzeichens und
einer Steuereinrichtung (3) zur Veranlassung der Kommunikationseinrichtung, die Leitung zu trennen, wenn die Erfassungseinrichtung die Impulse des Besetztzeichens erfaßt,
**gekennzeichnet durch**
eine Einstelleinrichtung (7) zum Einstellen der Anzahl der durch die Erfassungseinrichtung zu erfassenden Impulse des Besetztzeichens,
wobei die voreingestellte Anzahl von Impulsen durch eine Einstellung einer Bedienungsperson veränderbar ist, und
die Steuereinrichtung die Kommunikationseinrichtung veranlaßt, die Leitung zu trennen, wenn die von der Erfassungseinrichtung erfaßte Anzahl von Impulsen des Besetztzeichens die durch die Einstelleinrichtung voreingestellte Anzahl erreicht.

2. Bildkommunikationsgerät nach Anspruch 1, wobei das Bildkommunikationsgerät ein Faksimilegerät ist.

3. Bildkommunikationsgerät nach Anspruch 1, wobei die Erfassungseinrichtung eine Frequenz sowie einen Pegel eines von der Leitung gesendeten Signals erfaßt, ein Erfassungssignal auf EIN setzt, falls das Signal eine Frequenz des Besetztsignals und einen Pegel aufweist, der größer als ein vorbestimmter Pegel ist, einen EIN/AUS-Zustand des Erfassungssignals erfaßt, eine EIN/AUS-Zeit des Erfassungssignals zur Bestimmung einer Zeitdauer mißt und bestimmt, falls die Zeitdauer des von der Leitung gesendeten Signals dem Signal eines Besetztzeichens entspricht, daß das von der Leitung gesendete Signal das Besetztzeichensignal ist.

4. Bildkommunikationsgerät nach Anspruch 1, wobei die Einstelleinrichtung Einstellungen der Anzahl der Impulse aufweist und die Bedienungsperson eine Anzahl auswählt.

5. Bildkommunikationsgerät nach Anspruch 4, wobei die Einstelleinrichtung ein Bitschalter ist und eine der Einstellungen durch eine Position des Bitschalters ausgewählt wird.

6. Bildkommunikationsgerät nach Anspruch 1, wobei die Einstellung für die Einstelleinrichtung durch die Bedienungsperson mittels eines Zehn-Tasten-Felds bewirkt wird.

## Revendications

1. Appareil de communication d'images comprenant :
un moyen de communication (4) pour communiquer des données avec une station de destination par l'intermédiaire d'une ligne;
un moyen de détection (1, 2) pour détecter des impulsions d'une tonalité d'occupation provenant de la ligne; et
un moyen de commande (3) pour faire en sorte que le moyen de communication déconnecte la ligne lorsque le moyen de détection détecte les impulsions de la tonalité d'occupation;
caractérisé en ce qu'il comprend en outre
un moyen de réglage (7) pour régler le nombre d'impulsions de la tonalité d'occupation à détecter par le moyen de détection;
le nombre d'impulsions pré-réglé pouvant être changé par un réglage effectué par un opérateur; et
le moyen de commande commandant au moyen de communication de déconnecter la ligne lorsque le nombre d'impulsions de la tonalité d'occupation qui sont détectées par le moyen de détection atteint le nombre pré-réglé par le moyen de réglage.

2. Appareil de communication d'images selon la revendication 1, dans lequel cet appareil de communication d'images est un appareil de télécopie.

3. Appareil de communication d'images selon la revendication 1, dans lequel le moyen de détection détecte une fréquence et un niveau d'un signal provenant de la ligne, il place un signal de détection à l'état actif si le signal a une fréquence de la tonalité d'occupation et un niveau supérieur à un niveau prédéterminé, il détecte un état actif/inactif du signal de détection, il mesure une durée d'état actif/inactif du signal de détection pour déterminer une période, et si la période du signal provenant de la ligne correspond au signal de la tonalité d'occupation, il détermine que le signal provenant de la ligne est le signal de tonalité d'occupation.

4. Appareil de communication d'images selon la revendication 1, dans lequel le moyen de réglage a des réglages du nombre d'impulsions et l'opérateur sélectionne l'un d'eux.

5. Appareil de communication d'images selon la revendication 4, dans lequel le moyen de réglage est un commutateur de bits et l'un des réglages est sélectionné par une position de ce commutateur de bits.

6. Appareil de communication d'images selon la revendication 1, dans lequel le réglage du moyen de réglage est effectué par l'opérateur au moyen d'un clavier numérique.
